# EUROPEAN PATENT APPLICATION

(11) **EP 2 712 135 A1**
(43) Date of publication of application: **26.03.2014**
(21) Application number: 13181038.4
(22) Date of filing: 20.08.2013
(51) Int. Cl.: H04L 12/707, H04L 12/703, H04L 12/723

(54) **Network system, transmission device, and fault information delivery method**

(30) Priority: 24.09.2012 JP 2012209672
(71) Applicant: Hitachi Ltd., Tokyo 100-8280 (JP)
(72) Inventor: Takahashi, Kiyotaka, Tokyo, 100-8280 (JP); Mashimo, Daisuke, Tokyo, 100-8280 (JP); Ashi, Yoshihiro, Tokyo, 100-8280 (JP)
(74) Representative: MERH-IP Matias Erny Reichl Hoffmann

(57) **Abstract**

If, in a situation where the information about the OAM function of a first network 20-n including router networks is collected, a fault affecting a service used by a user occurs in a transmission network, which is a second network 10-1 that acts as a relay for the first network 20-n and includes a plurality of transmission devices having a fault monitoring function, the transmission network promptly reports the fault to the router networks by actively using the OAM function of the router networks in order to achieve rapid fault recovery.

## Description

### CLAIM FOR PRIORITY

The present application claims priority from Japanese patent application JP 2012-209672 filed on September 24, 2012, the content of which is hereby incorporated by reference into this application.

### BACKGROUND

The present invention relates to a network system, and more particularly to a transmission technology for utilizing a fault recovery function of a neighboring network.

At present, various services are provided through the networks of telecommunications carriers and used as a social infrastructure. It is demanded that these networks not only handle a traffic increase due to an increase in the number of services provided, but also achieve high reliability as a social infrastructure.

In an existing router network, autonomous distributed control is exercised in accordance with a routing protocol to provide high connectivity. Routers use the routing protocol to periodically exchange a packet with each other for the purpose of verifying the normality of connections to a neighboring router. If such a packet for normality verification is not exchanged for a predetermined period, the routers recognize that a fault has occurred in an affected communication path, recalculate route information for providing connectivity, and locate and set a route that reaches a destination without passing the location of the fault. An FRR (Fast ReRoute) function of locating and setting a route that temporarily bypasses the fault location, a Global Repair function, an Alternative Egress Repair function, and other fault recovery functions are also available. However, a packet exchange for fault detection is made at intervals of as long as several tens of seconds and the time required for fault recognition is on the order of several minutes. These problems need to be solved in order to achieve high reliability.

Such being the case, it is proposed that an OAM (Operations, Administration, and Management) function for monitoring the normality of a communication path, which has been used in a transmission network, be applied to a packet-based router network. It is also proposed that a router used as a core of the router network be replaced by a highly reliable transmission device to enhance the reliability of a telecommunications carrier. This enhances the reliability of a transmission network portion formed by the newly installed transmission device, but the reliability of the router network surrounding the transmission network portion is still not sufficiently high.

A protocol called "BFD (Bidirectional Forwarding Detection)", which allows edge routers of a router network to periodically exchange a packet for monitoring the normality of a communication path, is defined in IETF RFC 5880, 2010, 3.2 Operating Modes, 6.8.6 Reception of BFD Control Packets. The BFD protocol establishes a session for each user flow to be transferred, and exchanges a monitoring packet via the same route as for a user's main signal to verify the normality of a target communication path. If, in a certain user flow, the monitoring packet is not received for a period of preconfigured cycles (e.g., 3) out of reception cycles during which the reception of the monitoring packet is expected, an edge router determines that a fault has occurred in the user flow, sets a fault notification flag on a monitoring packet, and sends the monitoring packet to an opposing edge router. Upon receipt of the monitoring packet on which the fault notification flag is set, the opposing edge router activates the FRR or other fault recovery function and attempts to set a route that bypasses the location of the fault.

However, when verifying the normality of a communication path, the edge routers of a telecommunications carrier's network generally exchange the monitoring packet at intervals of approximately 1 second although the intervals depend on the scale of the network and on the number of accommodated user flows. Therefore, the reliability achieved remains substantially the same as that provided by a formerly used router network.

A related patent document is Japanese Unexamined Patent Application Publication No. 2006-180494. This patent document describes using an MPLS (Multi-Protocol Label Switching) OAM protocol to check whether a faulty LSP (Label Switching Path) exists in an MPLS network.

### SUMMARY

As the networks of telecommunications carriers providing various services have been serving as a social infrastructure, it is necessary to provide connectivity for gaining constant access to the services. It is therefore demanded that the networks of the telecommunications carriers be highly reliable.

As mentioned earlier, the formerly used router network is configured so that individual routers use the routing protocol to periodically exchange a packet with a neighboring router for the purpose of verifying the normality. When the normality cannot be verified, the routers recognize that a fault has occurred between the routers. However, the packet for verifying the normality is exchanged at intervals of as long as several tens of seconds and the time actually required for fault detection is on the order of minutes. It means that the time required for recovery is long. Therefore, the formerly used router network is not highly reliable.

Further, it is proposed that a router used as a core of the router network be replaced by a highly reliable transmission device to form a relay network for the purpose of enhancing the reliability of the network of a telecommunications carrier. This enhances the reliability of the replaced relay network, but the reliability of the router network surrounding the relay network is still not sufficiently high. Furthermore, the BFD protocol is proposed as a tool for providing the OAM function that monitors the normality of a communication path formerly used in the transmission network. However, when verifying the normality of a communication path, the edge routers of a telecommunications carrier's network generally exchange the monitoring packet at intervals of approximately 1 second. Therefore, the reliability achieved in this instance remains substantially the same as that provided by the formerly used router network. It means that improvements need be made to provide high reliability.

The present invention has been made in view of the above circumstances and provides a network system, a transmission device, and a fault information delivery method that make it possible to reduce the time required to achieve recovery from a fault affecting services when the fault occurs in a transmission network that functions as a relay for a router network of a telecommunications carrier.

According to an aspect of the present invention, there is provided a network system including a first network and a second network. The first network has a monitoring function and a fault recovery function. The second network acts as a relay for the first network and has a monitoring function that is exercised at shorter intervals than the monitoring function of the first network. If a fault affecting a service used by a user of the network system occurs in the second network, the fault recovery function is exercised by using the monitoring function of the second network.

According to another aspect of the present invention, there is provided a transmission device including a network interface section and a switch section. The network interface section forms a second network, which acts as a relay for a first network having a monitoring function and a fault recovery function, and includes a processing section and a storage section. The switch section is connected to the network interface section. The processing section has the monitoring function of the second network, which is exercised at shorter intervals than the monitoring function of the first network. If a fault affecting a service used by a user occurs in the second network, the processing section exercises the fault recovery function of the first network by using the monitoring function of the second network.

According to still another aspect of the present invention, there is provided a fault information delivery method for use in a network system having a first network and a second network. The first network has a monitoring function and a fault recovery function. The second network acts as a relay for the first network and has a monitoring function that is exercised at shorter intervals than the monitoring function of the first network. The fault information delivery method includes the step of exercising the fault recovery function of the first network by using the monitoring function of the second network if a fault affecting a service used by a user occurs in the second network.

The present invention makes it possible to enhance the reliability of the entire network including a router network because, if a fault affecting a service used by a user occurs in a relay network, the present invention activates a relevant fault recovery function more promptly than when an existing router network activates a fault recovery function through the use of an OAM function.

### BRIEF DESCRIPTION OF THE DRAWINGS

An embodiment of the present invention will be described in detail based on the following figures, in which:
FIG. 1 is a diagram illustrating an example of a telecommunications carrier's network system according to a first embodiment of the present invention;
FIG. 2 is a diagram illustrating an exemplary configuration of a table for managing the BFD state of each flow retained by a fault monitoring function according to the first embodiment;
FIG. 3 is a diagram illustrating an exemplary internal structure of a transmission device according to the first embodiment;
FIG. 4 is a diagram illustrating an exemplary configuration of a BFD packet according to the first embodiment;
FIG. 5 is a flowchart illustrating a fault monitoring process that is performed by the fault monitoring function according to the first embodiment;
FIG. 6 is a flowchart illustrating a fault detection process that is performed when a fault is detected by the fault monitoring function according to the first embodiment;
FIG. 7 is a flowchart illustrating a protection timer time-out process that is performed when a protection timer according to the first embodiment times out;
FIG. 8 is a flowchart illustrating a process of receiving a BFD packet that is snooped into by a filtering function according to the first embodiment;
FIG. 9 is a flowchart illustrating a process of receiving a BFD packet that is extracted by the filtering function according to the first embodiment in the event of a fault;
FIG. 10 is an exemplary sequence diagram illustrating how an existing network of the Prior Art detects a fault that occurs;
FIG. 11 is an exemplary sequence diagram illustrating how the first embodiment detects a fault that occurs; and
FIG. 12 is another exemplary sequence diagram illustrating how the first embodiment detects a fault that occurs.

### DETAILED DESCRIPTION

An embodiment of the present invention will now be described with reference to the accompanying drawings. In this document, a "function" may be referred to as a "section" or "means". For example, a "fault monitoring function" may be referred to as a "fault monitoring section" or "fault monitoring means".

### First Embodiment

A first embodiment of the present invention relates to a network system in which a relay network offered by a telecommunications carrier utilizes a fault recovery function of a neighboring router network when a service used by a user is found to be affected by a fault that has occurred in the relay network. The first embodiment also relates to a fault monitoring function and other similar functions. In other words, when a core of an existing router network is replaced by a highly reliable transmission device to form a relay network for the purpose of enhancing the reliability of the entire network of a telecommunications carrier, the relay network positively uses the fault recovery function of the neighboring router network.

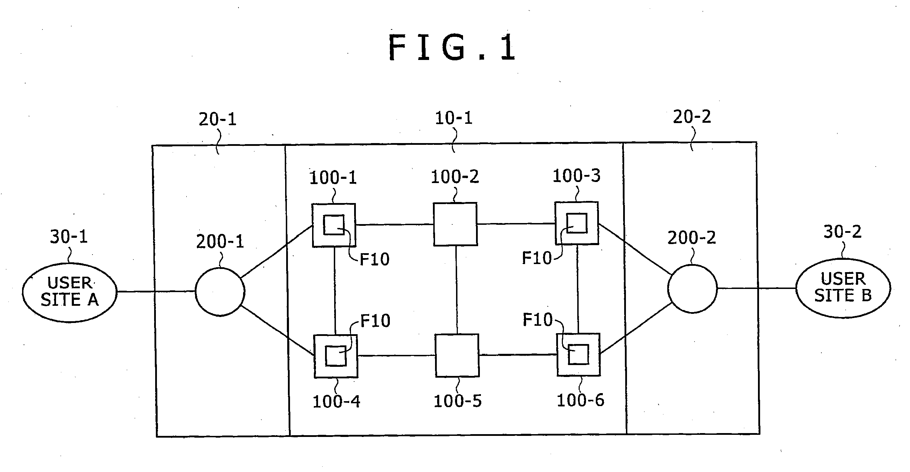

FIG. 1 is a diagram illustrating an exemplary configuration of a network system according to the first embodiment. More specifically, FIG. 1 shows the configuration of a telecommunications carrier's network in the network system and the relationship between user sites to which a service is provided through the network. The telecommunications carrier's network to which the present embodiment is applied includes an IP/MPLS (Internet Protocol/Multi-Protocol Label Switching) network 20-n (20-1, 20-2) and an MPLS-TP (Multi-Protocol Label Switching-Transport Profile) network 10-1. The IP/MPLS network 20-n is a router network that includes an IP/MPLS router device 200-n (200-1, 200-2). The MPLS-TP network 10-1 is a relay network that includes MPLS-TP devices 100-1 to 100-6.

In this document, the IP/MPLS network 20-n may be referred to as the first network, and the MPLS-TP network 10-1 may be referred to as the second network. The fault monitoring function according to the present embodiment is applied to the MPLS-TP devices 100-1, 100-3, 100-4, 100-6, which are transmission devices disposed at an edge of the relay network acting as the second network of the telecommunications carrier.

Each user site 30-n (30-1, 30-2) of the second network is connected to the IP/MPLS router device 200-n, which is included in the IP/MPLS network and located at an edge of the telecommunications carrier's network. In other words, the IP/MPLS router devices 200-1 and 200-2 are connected to user site A 30-1 and user site B 30-2, respectively. Meanwhile, the IP/MPLS router devices 200-1 and 200-2 are interconnected through the MPLS-TP network 10-1 to provide a service for making a connection between the user sites 30-1, 30-2.

The IP/MPLS router devices 200-1 and 200-2 have a fault recovery function (e.g., FRR (Fast Reroute) function) that is exercised, when a fault in a communication route is detected, to establish a route for maintaining continuous communication by averting the influence of the fault.

The IP/MPLS router devices 200-1 and 200-2 of the first network have a BFD function or other OAM function as a monitoring function for constantly monitoring the normality of the communication route along the same route as for a main signal. If a fault is detected in the communication route monitored by the BFD function, the IP/MPLS router devices 200-1 and 200-2 activate the fault recovery function incorporated therein by using the detected fault as a trigger. The monitoring function of the second network, such as The MPLS-TP network 10-1, performs monitoring at shorter intervals than the monitoring function of the first network, such as the IP/MPLS network 20-n.

The MPLS-TP devices 100-1 to 100-6, which form the relay network acting as the second network, are connected to the IP/MPLS router devices 200-1 and 200-2 disposed in the IP/MPLS networks 20-1, 20-2, which are the first networks, and used to transfer an IP/MPLS packet to the opposing IP/MPLS router device 200-1 or 200-2.

The MPLS-TP devices 100-1 to 100-6, which are transmission devices, exercise an OAM function and protection function defined by MPLS-TP within the MPLS-TP network 10-1, which is the relay network, to achieve consistently high transmission quality of SDH (Synchronous Digital Hierarchy) class, which is provided by a formerly used transmission technology. The MPLS-TP devices, which are the transmission devices, exercise their monitoring function to exchange a normality verification packet at intervals, for instance, of 3.3 milliseconds, whereas the router devices exercise their monitoring function to exchange a normality verification packet at intervals of approximately 1 second. It means that the MPLS-TP devices can promptly detect a fault in a communication route. When, for instance, a communication route is monitored by using the OAM function to set a communication path as a redundant element, continuous communication can be maintained by rapidly switching the communication route from a current one to a spare one in the event of a fault.

MPLS-TP is standardized by a standards organization. The IETF defines a data plane, such as a packet format, in RFC 5654, RFC 5960, and RFC 4448, and defines the OAM function and protection function in RFC 6427, RFC 6428, and RFC 6378.

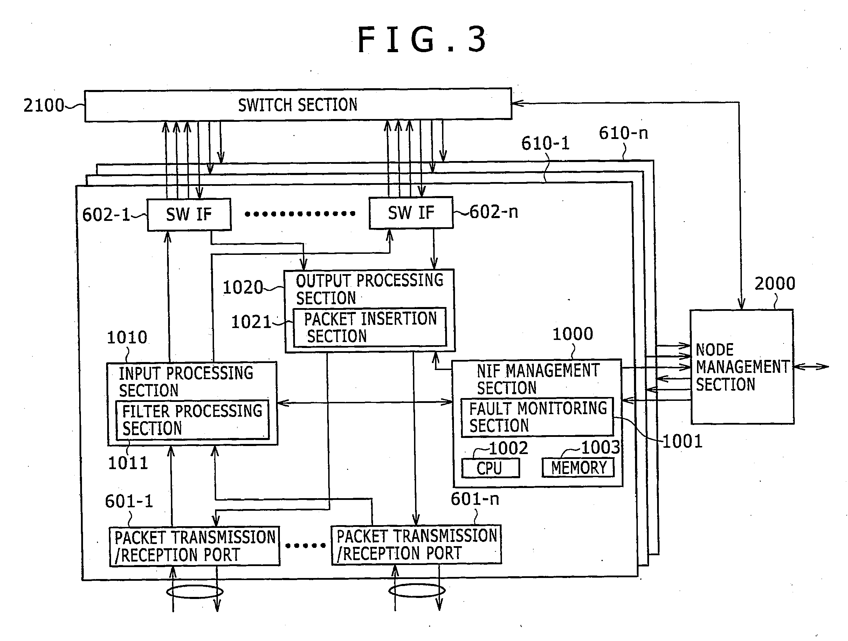

In the network system according to the present embodiment, the MPLS-TP devices 100-1, 100-3, 100-4, 100-6, which are the transmission devices disposed at an edge of the MPLS-TP network acting as the second network, have the fault monitoring function F10, as mentioned earlier, for collecting information by handling a BFD packet, which is exchanged between the IP/MPLS router devices 200-1 and 200-2 to monitor the communication route. The fault monitoring function F10 according to the present embodiment will now be described in a sequential manner. It should be noted that the fault monitoring function F10 is implemented by a fault monitoring section of an NIF management section in a network interface, which forms a transmission device, as described in detail later with reference to FIG. 3.

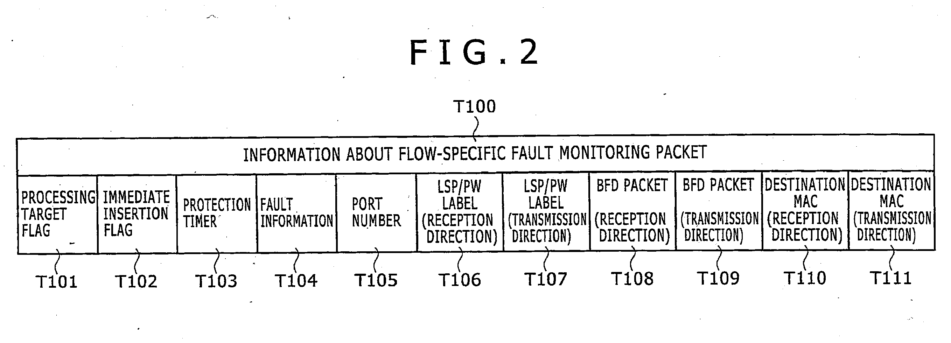

The fault monitoring function F10 snoops into the BFD packet exchanged on a communication route in each direction between the IP/MPLS router devices 200-1 and 200-2, and stores a BFD packet state of each flow identified by an MPLS label in a table T100 in a storage section inside the MPLS-TP device 100-1, 100-3, 100-4, 100-6, The table will be described in detail later with reference to FIG. 2.

If no fault has occurred in the MPLS-TP network 10-1, which is the second network, to affect a service provided to the user, the fault monitoring function F10 continuously snoops in order to store in the table inside the IP/MPLS router devices 200-1 and 200-2 the latest information about the BFD packet that is exchanged between the IP/MPLS router devices 200-1 and 200-2 in the first network.

If, on the other hand, a fault has occurred in the MPLS-TP network 10-1, which is the second network, to affect a service used by the user and fault recovery cannot be achieved within the MPLS-TP network 10-1, the fault monitoring function F10 works so as to activate the fault recovery function incorporated in the IP/MPLS router network, which is the first network. The fault affecting the service used by the user is, for example, a double fault or a single fault encountered when a redundant path is not set. The present embodiment can achieve prompt recovery from such faults, thereby making it possible to minimize the influence upon the service used by the user.

More specifically, if, for instance, the MPLS-TP device 100-1 receives an AIS (Alarm Indication Signal) packet with a fault forward notification flag, such as an LDI (Link Down Indication) flag, as fault information from the neighboring MPLS-TP device 100-2, it means that a fault has occurred in a communication route directed from the IP/MPLS router device 200-2 to the IP/MPLS router device 200-1. In this instance, the fault monitoring function F10 of the MPLS-TP device 100-1 changes, from snoop to extraction, the filter setting for the BFD packet in a flow directed from the IP/MPLS router device 200-1 to the IP/MPLS router device 200-2, which makes a pair with IP/MPLS router device 200-1 along a flow in which the fault indicated by the fault information is reported. The fault monitoring function F10 then extracts the BFD packet, which is transmitted from the IP/MPLS router device 200-1 to the IP/MPLS router device 200-2, sets the fault rearward notification flag as fault information, and retransmits the BFD packet to the IP/MPLS router device 200-2. An operation specific to the fault monitoring function F10 in the present embodiment will now be described with reference to a sequence diagram while comparing it to a BFD operation performed by a common monitoring function.

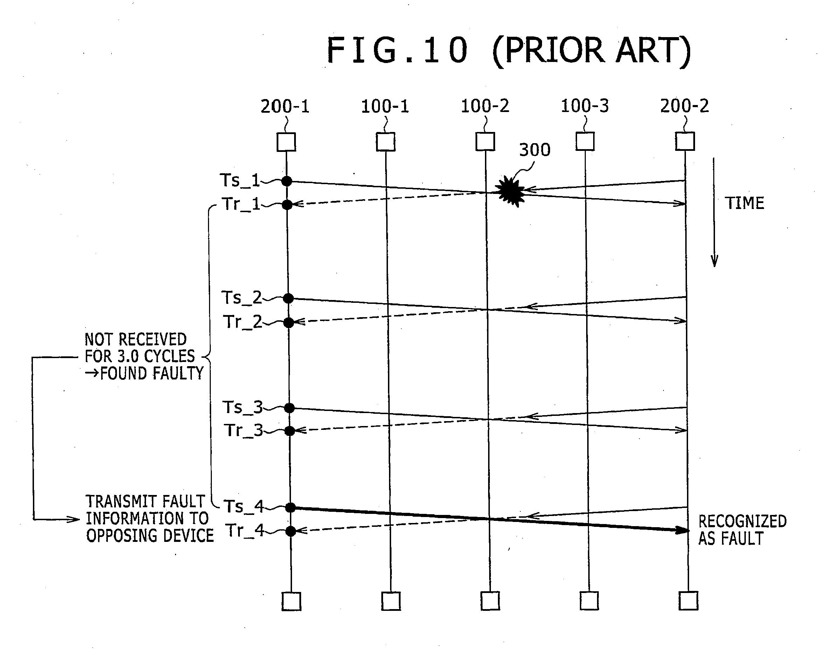

Referring to the sequence diagram of FIG. 10, when the above-described fault 300 occurs, the common BFD operation is performed to recognize the occurrence of the fault if the IP/MPLS router device 200-1 of the first network has not received the BFD packet from the IP/MPLS router device 200-2 of the first network for a period of preconfigured cycles (e.g. 3) out of BFD packet reception cycles. The IP/MPLS router device 200-1 then continuously transmits the BFD packet, on which the fault rearward notification flag is set as fault information, to the IP/MPLS router device 200-2 until the fault is resolved.

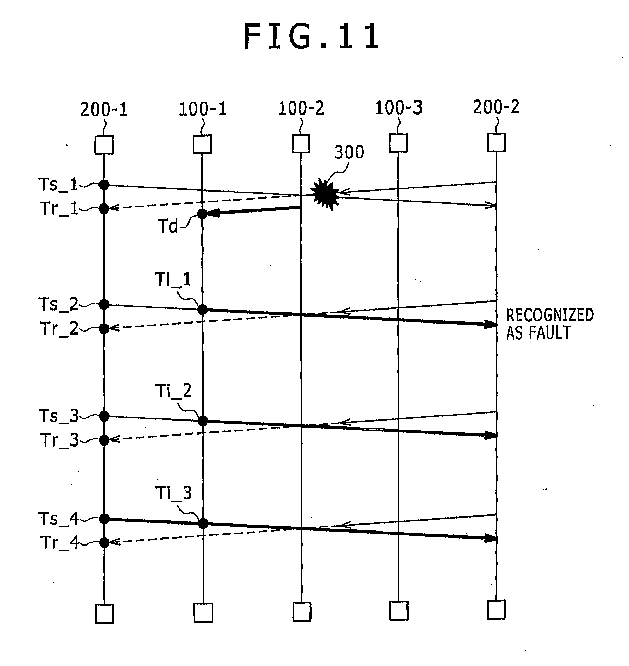

When, on the other hand, the fault information delivery method according to the present embodiment is used, the above-mentioned fault monitoring function F10 permits the MPLS-TP device 100-1, which is the transmission device of the second network, to detect the fault 300 at timing Td, namely, earlier than the IP/MPLS router device 200-1, as shown in the sequence diagram of FIG. 11. Thus, the fault monitoring function F10 of the MPLS-TP device 100-1 sets at timing Ti-1 the fault rearward notification flag, which is the fault information to be set by the IP/MPLS router device 200-1. This makes it possible to report the fault to the opposing IP/MPLS router 200-2 earlier than when a common BFD procedure incorporated in the IP/MPLS router device 200-1 is performed. Hence, the recognition of the fault can be expedited. As a result, the time interval between the instant at which the IP/MPLS network detects the fault and the instant at which fault recovery is achieved by using the fault recovery function can be significantly reduced.

Further, if, as another example, the MPLS-TP device 100-1 receives a CC (Continuity Check) packet with the fault rearward notification flag, such as an RDI (Remote Defect Indication) flag, as the fault information from the neighboring MPLS-TP device 100-2, it means that a fault has occurred in a communication route directed from the IP/MPLS router device 200-1 to the IP/MPLS router device 200-2. Hence, the fault monitoring function F10 of the MPLS-TP device 100-1 changes, from snoop to extraction, the filter setting for the BFD packet in a flow directed from the IP/MPLS router device 200-2 to the IP/MPLS router device 200-1, which makes a pair with a flow in which the fault indicated by the fault information is reported. The fault monitoring function F10 then extracts the BFD packet, which is transmitted from the IP/MPLS router device 200-2 to the IP/MPLS router device 200-1, sets the fault rearward notification flag as fault information, and retransmits the BFD packet to the IP/MPLS router device 200-1.

Even when the above-described fault occurs, as is the case with the above-described example, the common BFD operation is performed to recognize the occurrence of the fault if the IP/MPLS router device 200-2 has not received the BFD packet for a period of preconfigured cycles (e.g., 3) out of BFD packet reception cycles. The IP/MPLS router device 200-2 then continuously transmits the BFD packet, on which the fault rearward notification flag is set as fault information, to the IP/MPLS router device 200-1 until the fault is resolved.

On the other hand, the fault monitoring function F10 according to the present embodiment permits the MPLS-TP device 100-1 in the second network to detect the fault earlier than the IP/MPLS router device 200-2, which forms the first network. Thus, the fault monitoring function F10 of the MPLS-TP device 100-1 sets the fault rearward notification flag, which is to be set by the IP/MPLS router device 200-2, as fault information. This makes it possible to report the fault to the opposing IP/MPLS router device 200-1 earlier than when the common BFD procedure incorporated in the IP/MPLS router device is performed. As a result, the time interval between the instant at which the IP/MPLS network detects the fault and the instant at which fault recovery is achieved by using the fault recovery function can be significantly reduced.

Further, a modification of the method according to the present embodiment enables the MPLS-TP device in the second network, which has detected a fault, to newly generate the BFD packet, which is exchanged in a flow affected by an encountered fault, from BFD packet information that is collected and stored in the later-described table by the fault monitoring function F10. Therefore, when the fault monitoring function F10 of the MPLS-TP device in the second network detects the fault, the BFD packet to be transmitted to the associated IP/MPLS router device in the first network is configured with the fault rearward notification flag set as fault information and transmitted. Hence, the fault information can be delivered promptly without actually waiting for the cycle of the BFD packet exchanged between the IP/MPLS router devices in the first network. This makes it possible to achieve fault notification at an increased speed, activate the fault recovery function of the IP/MPLS network more promptly, and enhance the reliability of the entire network of the telecommunications carrier.

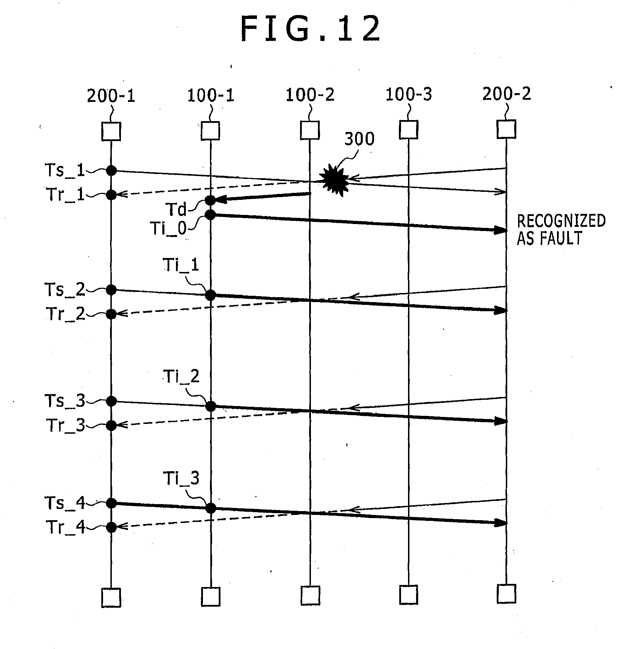

In the above instance, as shown in the sequence diagram of FIG. 12, the fault monitoring function F10 configures the BFD packet with the fault rearward notification flag by itself only once when the fault is detected, and transmits the BFD packet to the target IP/MPLS router device 200-2. Then, as described earlier, the fault monitoring function F10 extracts the BFD packet transmitted from the IP/MPLS router device 200-1 of the first network, sets the fault rearward notification flag, and retransmits the BFD packet. This operation is continuously performed until the target IP/MPLS router device detects the fault and sets the fault rearward notification flag by itself.

Even in a situation where the method according to the present embodiment is employed, if the IP/MPLS router device detects the fault and the fault monitoring function F10 of the MPLS-TP device detects that the fault rearward notification flag has begun to be set for the BFD packet to be transmitted, the BFD function intrinsically incorporated in the IP/MPLS router device changes the filter setting for the flow monitored by the associated BFD function from extraction to snoop.

FIG. 2 shows an exemplary configuration of a table T100 that is provided with a plurality of fields and used in the above-described examples of the present embodiment to manage the BFD state of each flow retained by the fault monitoring function F10 of the MPLS-TP devices 100-1, 100-3, 100-4, 100-6 in the second network.

As shown in FIG. 2, the table T100 includes a processing target flag field T101, which indicates whether or not a stored entry is a target to be processed in accordance with the method according to the present embodiment. In the processing target flag field T101, the value "0" indicates that the entry is not a target, whereas the value "1" indicates that the entry is a target. The table T100 also includes an immediate insertion flag field T102, which indicates whether or not the fault monitoring function F10 configures the BFD packet, on which the fault rearward notification flag is set, and transmits the BFD packet to a target IP/MPLS router device immediately after the detection of a fault. In the immediate insertion flag field T102, the value "0" indicates that immediate insertion is to be performed, whereas the value "1" indicates that immediate insertion is not be performed. A protection timer field T103 included in the table T100 is used to specify protection time in seconds when the immediate insertion flag field T102 is enabled. The protection time is an interval between the instant at which the fault is detected and the instant at which the BFD packet is actually transmitted.

The table T100 further includes a fault information field T104, which stores the type of the fault. The fault information field T104 stores, for example, an LDI reception, which is a fault forward notification provided by the MPLS-TP OAM, an RDI reception, which is a fault rearward notification provided by the MPLS-TP OAM, or a received light level fault at a physical port. A port number field T105 included in the table T100 stores an identifier that identifies a physical port on an MPLS-TP device.

Furthermore, an LSP/PW label (reception direction) field T106 and an LSP/PW label (transmission direction) field T107 are also included in the table T100. The LSP/PW label (reception direction) field T106 stores an LSP (Label Switched Path) label and a PW (Pseudowire) label, which identify a logical path for receiving from a neighboring MPLS-TP device and transferring to a neighboring IP/MPLS router device. The LSP/PW label (transmission direction) field T107 stores an LSP label and a PW label, which identify a logical path for receiving from a neighboring IP/MPLS router device and transferring to a neighboring MPLS-TP device.

Moreover, a BFD packet (reception direction) field T108 and a BFD packet (transmission direction) field T109 are also included in the table T100. The BFD packet (reception direction) field T108 stores an identifier for identifying a flow indicated by a BFD packet that is received from a neighboring MPLS-TP device and transferred to a neighboring IP/MPLS router device. The BFD packet (transmission direction) field T109 stores an identifier for identifying a flow indicated by a BFD packet that is received from a neighboring IP/MPLS router device and transferred to a neighboring MPLS-TP device.

In addition, the table T100 includes a destination MAC (reception direction) field T110 and a destination MAC (transmission direction) field T111. The destination MAC (reception direction) field T110 stores a destination MAC address of an Ethernet (registered trademark) frame that is used to configure a BFD packet to be transmitted to a neighboring IP/MPLS router device while the immediate insertion flag field T102 is enabled. The destination MAC (transmission direction) field T111 stores a destination MAC address of an Ethernet frame that is used to configure a BFD packet to be transmitted to a neighboring MPLS-TP device while the immediate insertion flag field T102 is enabled.

The reception direction and the transmission direction, which are the terms used in various fields shown in FIG. 2, indicate the direction of a flow handled by a network interface that is connected to an IP/MPLS router of an MPLS-TP device. The reception direction is the direction of a flow in which a transfer is made from a network interface section of a subsequently-described transmission device shown in FIG. 3 toward a switch section and processing is performed in an input processing section. The transmission direction is the direction of a flow in which a transfer is made from the switch section to a port network interface section and processing is performed in an output processing section. The destination MAC fields T110, T111 in the device remove and store a source MAC address of a packet received in the associated flow.

FIG. 3 is a diagram illustrating a concrete exemplary internal structure of a communication device that acts as the transmission device of a transmission network in the network system according to the embodiment shown in FIG. 1. The transmission device includes a node management section 2000, a plurality of network interface sections 610-1 to 610-n, and a switch section 2100. The node management section 2000 provides control of the entire device. The switch section 2100 interconnects the network interface sections 610-1 to 610-n.

The network interface sections 610-1 to 610-n each include packet transmission/reception ports 601-1 to 601-n, interfaces to the switch section 2100 (SWIFs) 602-1 to 602-n associated respectively with the packet transmission/reception ports, an input processing section 1010 for performing a filtering process and other processes on a packet received through a packet transmission/reception section, an output processing section 1020 for performing a packet insertion or other transmission process on a packet through the packet transmission/reception section, and a network interface (NIF) management section 1000 for providing control over fault monitoring and controlling the input processing section 1010 and the output processing section 1020.

Functional blocks of the network interface sections 610-1 to 610-n, excluding the SWIFs 602-1 to 602-n and the packet transmission/reception ports 601-1 to 601-n, are usually implemented, for instance, by a CPU (Central Processing Unit) 1002 that is a processing section and a memory 1003 that acts as a functional program storage section. However, it is obvious that such functional blocks may be configured by dedicated hardware. Such being the case, the functional blocks of the transmission device described in this document, namely, the input processing section 1010, the output processing section 1020, and the NIF management section 1000, may be generically referred to as the processing section of the transmission device.

The node management section 2000 offers a management interface to an administrator of the transmission device and allows the administrator to variously set and operate the device. The node management section 2000 retains a storage device and can retain initial setup information required for device initialization. When initializing the transmission device, the node management section 2000 initializes the functions incorporated in the device by using the initial setup information stored in the storage device or by using default values retained in the node management section 2000. Setup operations and other operations performed by the administrator with respect to the node management section 2000 are reflected as needed in the NIF management section 1000 in an appropriate one of the network interface sections 610-1 to 610-n included in the transmission device.

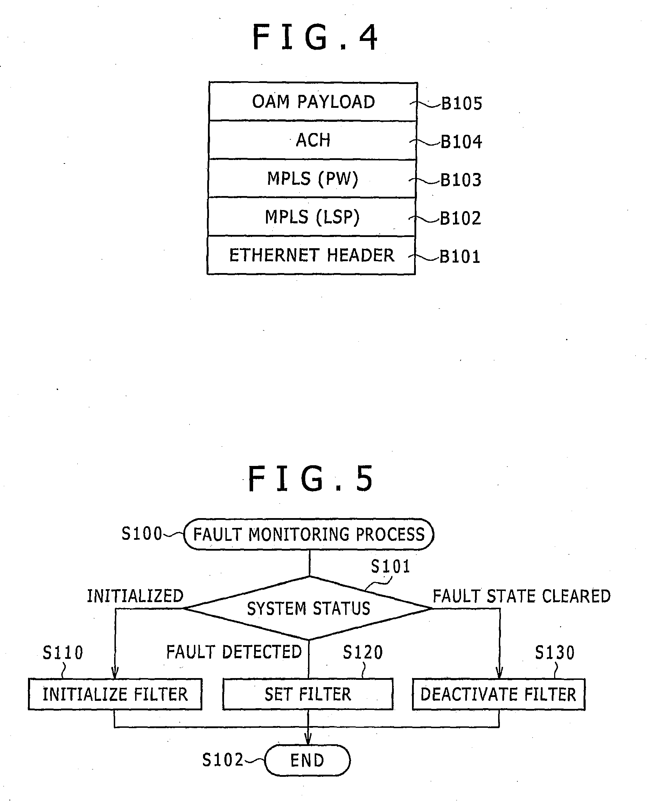

A fault monitoring section 1001 in the NIF management section 1000 implements processes shown in FIGS. 5 to 9, which will be described in detail later, for instance, by executing a program by a CPU 1002 in order to implement the fault monitoring function F10 shown in FIG. 1. A filter processing section 1011 in the input processing section 1010 implements a filtering function of snooping into or extracting a BFD packet or other received OAM packet, which is an input for the fault monitoring function F10, for instance, by executing the program by the CPU 1002. A packet insertion section 1021 in the output processing section 1020 has a function of transmitting a BFD packet configured by the fault monitoring function F10 and a BFD packet on which the fault rearward notification flag is newly set, and is similarly implemented, for instance, by executing the program by the CPU 1002. The BFD state management table T100 according to the present embodiment, which is shown in FIG. 2, is configured and managed in a memory 1003 in the NIF management section 1000.

FIG. 4 shows an exemplary configuration of the above-described BFD packet according to the present embodiment. The BFD packet is configured by the output processing section 1020 when it is to be transmitted to a neighboring IP/MPLS router device or MPLS-TP device with the immediate insertion flag field T102 shown in FIG. 2 enabled.

As shown in FIG. 4, the BFD packet includes an Ethernet (registered trademark) header B101, which includes a destination MAC address, a source MAC address, and a type value. The type value is uniquely determined by a protocol to be transferred. In the case of MPLS, the type value is 0x8847 hexadecimal (fixed value). MPLS (LSP) B102 is an MPLS label that identifies an LSP. MPLS (PW) B103 is an MPLS label that identifies a PW. ACH (Associated Channel) B104 is a header formed by a fixed value indicating that an OAM packet is encapsulated into the BFD packet. An OAM payload B105 is a concrete OAM payload that is to be encapsulated into the BFD packet.

A concrete example indicating the configuration of the BFD packet shown in FIG. 4 will now be described with reference to the sequence diagram shown in FIG. 12, which depicts the present embodiment. As mentioned earlier, FIG. 12 shows a BFD packet transmission/reception sequence that is followed when the immediate insertion flag shown in FIG. 2 is enabled. When the MPLS-TP device 100-1 inserts the BFD packet, the LSP/PW label, BFD packet, and destination MAC fields shown in FIG. 2 are referenced in accordance with the direction of insertion to configure the BFD packet shown in FIG. 4.

When, for instance, the MPLS-TP device 100-1 transmits the BFD packet to the neighboring IP/MPLS router device 200-1, the BFD packet is configured by using the LSP/PW label (reception direction) T106, BFD packet (reception direction) T108, and destination MAC field (reception direction) T110 shown in FIG. 2.

When the MPLS-TP device 100-1 transmits the BFD packet to the IP/MPLS router device 200-2, which is on the side toward the neighboring MPLS-TP device 100-2, the BFD packet is configured by using the LSP/PW label (transmission direction) T107, BFD packet (transmission direction) T109, and destination MAC field (transmission direction) T111 shown in FIG. 2. A MAC address assigned to a physical port for transmitting the BFD packet is used as the source MAC address included in the Ethernet (registered trademark) header of each BFD packet.

Processes of the fault monitoring function F10 according to the present embodiment, which are shown in FIGS. 5 to 9, will now be described in detail. As mentioned earlier, each of these processes is implemented when a program is processed by a processing section corresponding to the NIF management section 1000.

FIG. 5 shows a fault monitoring process S100 incorporated in the fault monitoring function F10 of the MPLS-TP device, which acts as the transmission device. The fault monitoring process S100 is recalled when the fault monitoring function F10 of the MPLS-TP device is initialized, when the fault monitoring function F10 detects a fault, and when the fault rearward notification flag is set for a BFD packet extracted by a filter. First of all, a state in which the process is recalled is identified (step S101). If the fault monitoring function F10 is initialized, a packet filtering function is initialized (step S110). In step S110, all the associated packet filters are set up for snoop.

If a double fault, a single fault encountered when a redundant path is not set, or other fault affecting a service used by the user is detected, a setup change process is performed (step S120) to change the filter setting from snoop to extraction in order to extract the BFD packet in a flow affected by the detected fault, which is identified by a fault notification. If the fault rearward notification flag is set on the BFD packet extracted by the filter, it is found that the fault monitoring function F10 of the MPLS-TP device no longer needs to set the fault rearward notification flag. In this instance, therefore, a filter deactivation process is performed (step S130) in order to change the filter setting to snoop instead of extracting the BFD packet from the flow. Upon completion of step S110, S120, or S130, the fault monitoring process S100 comes to an end (step S102).

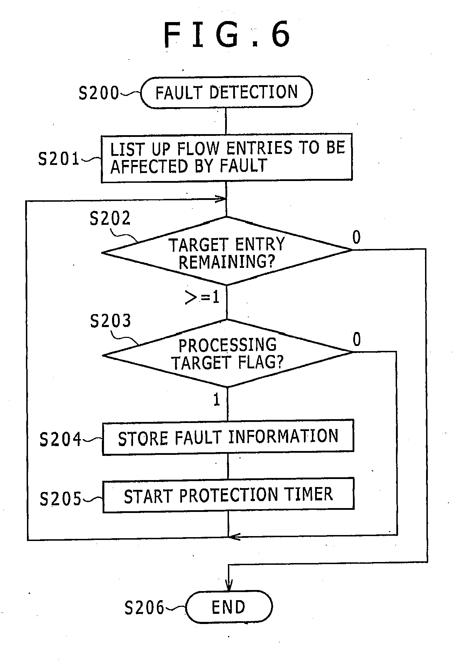

FIG. 6 shows a fault detection process S200 that is performed when the fault monitoring function F10 of the MPLS-TP device detects a fault. A list-up process is performed (step S201) to list up flows that are to be monitored by the fault monitoring function F10 of the MPLS-TP device because they will be affected by the detected fault, such as an LDI reception, which is a fault forward notification provided by the MPLS-TP OAM, an RDI reception, which is a fault rearward notification provided by the MPLS-TP OAM, or a received light level fault at a physical port. In the list-up process (step S201), the flows to be processed as they will be affected by the fault are extracted from the BFD state management table T100 in accordance with the cause of the detected fault. More specifically, if the detected fault is an LDI reception or an RDI reception, the same flow entries as the flow in which a fault indicated by a received fault notification packet (LDI or RDI) is encountered are extracted from the BFD state management table T100. If, on the other hand, the detected fault is a received light level fault at a physical port, all entries whose port number in the BFD state management table T100 coincides with a number identifying the physical port are extracted.

The following process is performed on each of the target flows indicated by the entries listed up from the BFD state management table T100 (step S202). Step S203 is performed to check whether the processing target flag of each entry is to be subjected to the processing method according to the present embodiment. If a checked entry is not to be subjected to the processing method according to the present embodiment, the next entry is checked to determine whether it is to be subjected to the processing method according to the present embodiment. If the checked entry is to be subjected to the processing method according to the present embodiment, detected fault information is stored in the fault information field T104 of the entry (step S204). Next, a timer is activated for a number of seconds specified in the protection timer field T103 of the entry (step S205). Upon completion of step S205, the entry is checked to determine whether it is to be subjected to the processing method according to the present embodiment. When all the relevant entries are processed in the above-described manner, the fault detection process S200 comes to an end (step S206).

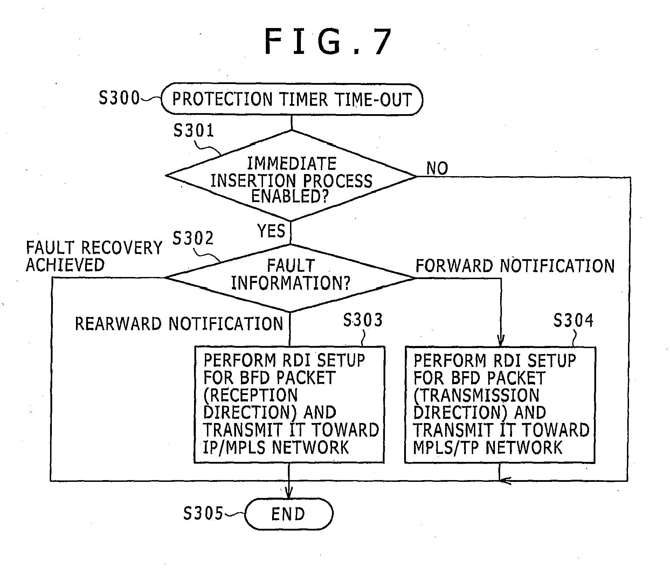

FIG. 7 shows a protection timer time-out process S300 that is performed when a protection timer times out. If an immediate insertion process is disabled in the immediate insertion flag field T102 indicated by an entry in the BFD state management table T100 that has timed out (step S301), the protection timer time-out process S300 comes to an end (step S305). If, on the other hand, the immediate insertion process is enabled in the immediate insertion flag field T102, the process is branched in accordance with the fault information (step S302). If the fault is already recovered from, the process comes to an end (step S305). If the detected cause of the fault is a fault rearward notification reception, a BFD packet with the fault rearward notification flag is configured by using the information stored in the BFD packet (reception direction) field stored by the entry and transmitted toward a neighboring IP/MPLS router device (step S303). Upon completion of step S303, the process comes to an end (step S305). If, on the other hand, the detected cause of the fault is a fault forward notification reception, a BFD packet with the fault rearward notification flag is configured by using the information stored in the BFD packet (transmission direction) field stored by the entry and transmitted toward a neighboring MPLS-TP device (step S304). Upon completion of step S304, the process comes to an end (step S305).

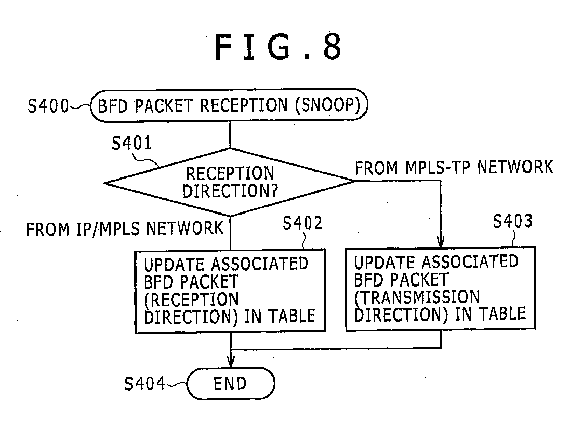

FIG. 8 shows a BFD packet reception process S400 of receiving a BFD packet that is snooped into by the filtering function of the MPLS-TP device. The process is branched depending on whether the BFD packet is received from a neighboring MPLS-TP device or from a neighboring IP/MPLS router device (step S401). If the BFD packet is received from a neighboring MPLS-TP device, a relevant entry is retrieved from the BFD state management table T100 to update the information in the BFD packet (reception direction) field with the information in the received BFD packet (step S402). Upon completion of step S402, the process comes to an end (step S404). If, on the other hand, the BFD packet is received from a neighboring IP/MPLS router device, a relevant entry is retrieved from the BFD state management table T100 to update the information in the BFD packet (transmission direction) field with the information in the received BFD packet (step S403). Upon completion of step S403, the process comes to an end (step S404).

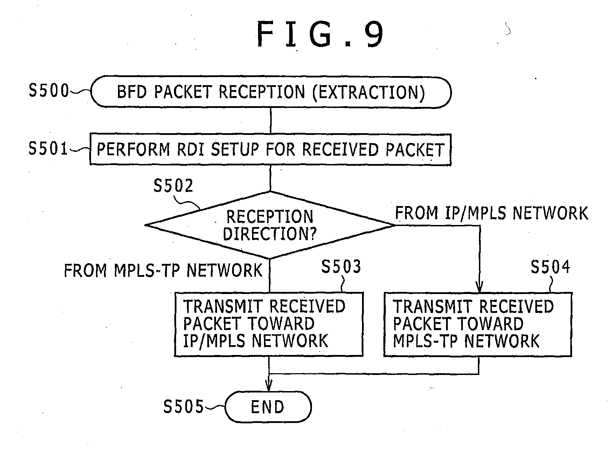

FIG. 9 shows a BFD packet reception process S500 of receiving a BFD packet that is extracted by the filtering function of the MPLS-TP device in the event of a fault. The fault rearward notification flag is set for the received packet (step S501). The process is branched depending on whether the BFD packet is received from a neighboring MPLS-TP device or from a neighboring IP/MPLS router device (step S502). If the BFD packet is received from a neighboring MPLS-TP device, the BFD packet is transmitted toward the IP/MPLS network (step S503). Upon completion of step S503, the process comes to an end (step S505). If, on the other hand, the BFD packet is received from a neighboring IP/MPLS router device, the BFD packet is transmitted toward the MPLS-TP network (step S504). Upon completion of step S504, the process comes to an end (step S505).

As described above, if, in a situation where the information about the OAM function of a router network of a telecommunications carrier is collected, a fault affecting a service occurs in a transmission network acting as a relay for the router network, the present invention permits the transmission network to promptly report the fault to the router network by actively using the OAM function of the router network. Hence, the present invention is advantageous in that it can promptly activate the fault recovery function to enhance the reliability of the entire network including the router network.

The present invention is not limited to the foregoing embodiment, but includes various modifications. The foregoing embodiment has been described on the assumption that an IP/MPLS network is used as the first network and that an MPLS-TP network is used as the second network, which performs monitoring at shorter intervals than the first network. However, the present invention is not limited to such a configuration. Although the present invention has been described on the assumption that the FRR (Fast ReRoute) function is used as the first network's fault recovery function of locating and setting a route that temporarily bypasses a fault location, the Global Repair function, the Alternative Egress Repair function, or other fault recovery function may be used.

The foregoing embodiment has been described in detail for better understanding of the present invention. The present invention is not limited to an embodiment that includes all the elements described above. Further, the above-described elements, including the functions and processing sections, have been mainly described on the assumption that some or all of them are implemented by software including various functional programs. However, it is obvious that such elements may be implemented by hardware designed, for instance, by using an integrated circuit.

## Claims

1. A network system comprising:
a first network (20-n) that has a monitoring function and a fault recovery function; and
a second network (10-1) that acts as a relay for the first network (20-n) and has a monitoring function that is exercised at shorter intervals than the monitoring function of the first network (20-n);
wherein, if a fault affecting a service used by a user of the network system occurs in the second network (10-1), the fault recovery function is exercised by using the monitoring function of the second network (10-1).

2. The network system according to claim 1,
wherein the monitoring function of the second network (10-1) collects information by snooping into a monitoring packet used in a normal state, which is exchanged by the monitoring function of the first network (20-n), and
wherein, if a fault affecting the service used by the user occurs in the second network (10-1), the monitoring function of the second network (10-1) extracts the monitoring packet to be transferred, reinserts the monitoring packet for which fault information is set, and delivers the fault information to the first network (20-n), or
wherein, if a fault affecting the service used by the user occurs in the second network (10-1), the monitoring function of the second network (10-1) configures, in accordance with the collected information, the monitoring packet for which fault information is set, and transmits the monitoring packet to the first network (20-n) to deliver the fault information thereto.

3. The network system according to claim 2,
wherein the first network (20-n) is an IP/MPLS (Internet Protocol/Multi-Protocol Label Switching) network; wherein the second network (10-1) is an MPLS-TP (Multi-Protocol Label Switching-Transport Profile) network and uses an OAM (Operations, Administration, and Management) packet as the monitoring packet relative to the first network (20-n), and
wherein the monitoring function of the second network (10-1) extracts the OAM packet, sets a fault notification flag as the fault information on the OAM packet, and retransmits the OAM packet to the first network (20-n), or
wherein the monitoring function of the second network (10-1) configures, in accordance with the information collected by snooping into the OAM packet, the OAM packet on which a fault notification flag is set as the fault information, and transmits the OAM packet to the first network (20-n).

4. A transmission device comprising:
a network interface section (610-n) that forms a second network (10-1), which acts as a relay for a first network (20-n) having a monitoring function and a fault recovery function, and includes a processing section (1002) and a storage section (1003); and
a switch section (2100) that is connected to the network interface section (610-n),
wherein the processing section (1002) has the monitoring function of the second network (10-1), which is exercised at shorter intervals than the monitoring function of the first network (20-n), and if a fault affecting a service used by a user occurs in the second network (10-1), exercises the fault recovery function of the first network (20-n) by using the monitoring function of the second network (10-1).

5. The transmission device according to claim 4,
wherein the processing section (1002) collects information by snooping into a monitoring packet used in a normal state, which is exchanged by the monitoring function of the first network (20-n), and stores the collected information in the storage section (1003), and
wherein, if a fault affecting the service used by the user occurs in the second network (10-1), the processing section (1002) extracts the monitoring packet to be transferred by the monitoring function of the second network (10-1), reinserts, in accordance with the information stored in the storage section (1003), the monitoring packet for which fault information is set, and delivers the fault information to the first network (20-n), or
wherein, if a fault affecting the service used by the user occurs in the second network (10-1), the processing section (1002) configures, in accordance with the information stored in the storage section (1003), the monitoring packet for which fault information is set, and transmits the monitoring packet to the first network (20-n) to deliver the fault information thereto.

6. The transmission device according to claim 5,
wherein the first network (20-n) is an IP/MPLS network; wherein the second network (10-1) is an MPLS-TP network and uses an OAM packet as the monitoring packet relative to the first network (20-n), and
wherein the processing section (1002) extracts the OAM packet, sets a fault notification flag as the fault information on the OAM packet in accordance with the information stored in the storage section (1003), and retransmits the OAM packet to the first network (20-n), or
wherein the processing section (1002) snoops into and collects the OAM packet, configures, in accordance with the information stored in the storage section (1003), the OAM packet on which a fault notification flag is set as the fault information, and transmits the OAM packet to the first network (20-n).

7. A method of delivering a fault information between a first part of a first network (20-n) and a second part of a first network (20-n) via a second network (10-1), comprising the steps of:
exchanging a packet between a first router device (200-1) of the first part of the first network (20-n) and a second router device (200-2) of the second part of the first network (20-n) to monitor a communication route,
snooping the packet at a first device (100-1) of the second network (10-1) to store a packet state in a table of the first device (100-1), wherein the first device (100-1) is disposed at an edge of the second network (10-1),
if a fault has occurred in the communication route from the second router device (200-2) to the first router device (200-1), receiving a fault information from a second device (100-2) at the first device, wherein the second device (100-2) is connected to the first device (200-1), and
delivering the fault information from the first device (100-1) to the second router device (200-2).

8. A method of delivering a fault information according to claim 7,
wherein the first and second router devices (200-1, 200-2) have fault recovery units and monitoring units,
wherein the first device (100-1) has an input processing unit, an output processing unit and a management unit, the management unit has a CPU and a memory which includes the table and a fault monitoring program, and
wherein a fault monitoring unit, by executing the fault monitoring program by the CPU of the management unit, performs monitoring at shorter intervals than the monitoring units of the first and second router devices (200-1, 200-2).

9. A method of delivering a fault information according to claim 8, further comprising the following steps performed before delivering the fault information from the first device (100-1) to the second router device (200-2):
extracting the packet by the input processing unit of the first device (100-1),
setting the fault information on the packet by a fault monitoring unit in the management unit of the first device (100-1), and
delivering the fault information set on the packet by the output processing unit of the first device (100-1).

10. A method of delivering a fault information according to claim 9, further comprising the following steps performed after receiving the fault information from the second device (100-2) at the first device (100-1):
configuring the packet including the fault information by the fault monitoring unit in the management unit, and
delivering the packet including the fault information from the first device (100-1) to the second router device (200-2).

11. A transmission device comprising:
a network interface having an input processing unit, an output processing unit and a management unit, and
a switch connected to the network interface,
wherein the input processing unit receives a packet which is exchanged between a first router device (200-1) of a first part of a first network (20-n) and a second router device (200-2) of a second part of the first network (20-n) via a second network (10-1) including the transmission device to monitor a communication route, and snoops the packet,
wherein the management unit has a CPU, a memory which includes a table and a fault monitoring program and a fault monitoring unit, executes the fault monitoring program by using the CPU, and stores a packet state of the packet received at the input processing unit in the table, and
wherein, if a fault has occurred in the communication route from the second router device (200-2) to the first router device (200-1):
the management unit receives a fault information from another transmission device connected to the transmission device, and
the output processing unit delivers the fault information to the second router device (200-2).

12. A transmission device, provided for a network system according to at least one of claims 1 to 3, comprising:
a network interface section (610-n) that forms the second network (10-1), and includes a processing section (1002) and a storage section (1003); and
a switch section (2100) that is connected to the network interface section (610-n),
wherein the processing section (1002) has the monitoring function of the second network (10-1), which is exercised at shorter intervals than the monitoring function of the first network (20-n), and if a fault affecting a service used by a user occurs in the second network (10-1), exercises the fault recovery function of the first network (20-n) by using the monitoring function of the second network (10-1).

13. The transmission device according to claim 12,
wherein the processing section (1002) collects information by snooping into a monitoring packet used in a normal state, which is exchanged by the monitoring function of the first network (20-n), and stores the collected information in the storage section (1003), and
wherein, if a fault affecting the service used by the user occurs in the second network (10-1), the processing section (1002) extracts the monitoring packet to be transferred by the monitoring function of the second network (10-1), reinserts, in accordance with the information stored in the storage section (1003), the monitoring packet for which fault information is set, and delivers the fault information to the first network (20-n), or
wherein, if a fault affecting the service used by the user occurs in the second network (10-1), the processing section (1002) configures, in accordance with the information stored in the storage section (1003), the monitoring packet for which fault information is set, and transmits the monitoring packet to the first network (20-n) to deliver the fault information thereto.

14. The transmission device according to claim 13
wherein the first network (20-n) is an IP/MPLS network; wherein the second network (10-1) is an MPLS-TP network and uses an OAM packet as the monitoring packet relative to the first network (20-n), and
wherein the processing section (1002) extracts the OAM packet, sets a fault notification flag as the fault information on the OAM packet in accordance with the information stored in the storage section (1003), and retransmits the OAM packet to the first network (20-n), or
wherein the processing section (1002) snoops into and collects the OAM packet, configures, in accordance with the information stored in the storage section (1003), the OAM packet on which a fault notification flag is set as the fault information, and transmits the OAM packet to the first network (20-n).

15. A transmission device, provided for a network system according to at least one of claims 1 to 3, comprising:
a network interface having an input processing unit, an output processing unit and a management unit, and
a switch connected to the network interface,
wherein the input processing unit receives a packet which is exchanged between a first router device (200-1) of a first part of the first network (20-n) and a second router device (200-2) of a second part of the first network (20-n) via the second network (10-1) including the transmission device to monitor a communication route, and snoops the packet,
wherein the management unit has a CPU, a memory which includes a table and a fault monitoring program and a fault monitoring unit, executes the fault monitoring program by using the CPU, and stores a packet state of the packet received at the input processing unit in the table, and
wherein, if a fault has occurred in the communication route from the second router device (200-2) to the first router device (200-1):
the management unit receives a fault information from another transmission device connected to the transmission device, and
the output processing unit delivers the fault information to the second router device (200-2).
